# EUROPEAN PATENT APPLICATION

(11) **EP 1 995 298 A1**
(43) Date of publication of application: **26.11.2008**
(21) Application number: 08008755.4
(22) Date of filing: 09.05.2008
(51) Int. Cl.: C10L 5/44

(54) **Process for biomass production from residue and industrial effluents, in particular from timber, cork and cellulose industries**

(30) Priority: 11.05.2007 PT 10373907
(71) Applicant: Universidade de Tras-os-Montes e Alto Douro, 5000-911 Vila Real (PT)
(72) Inventor: da Rosa Pires, Artur, 3830-052 Ílhavo (PT); Ragageles Valente, António José, 3860-254 Estarreja (PT); Almeida Ribeiro Claro, João Carlos, Gravelos 5000-027 Vila Real (PT)
(74) Representative: Ferreira, Maria Silvina

(57) **Abstract**

The present invention refers to a process which uses waste from the timber and cork sectors, namely cork dust, "soils", fibre dust and dust from polishing wood and sawdust, which when added to the effluents from the timber, cork and cellulose sectors, via an integrated biomass production line, generates products with great calorific power with applications for combustion, whose energy can be used when burnt in a boiler or other heating structures, namely in as briquettes or pellets, with application for biomass power stations.

In this way, the process performed by the present invention leads to using the energy from waste and effluents from industrial units, thereby contributing towards solving environmental problems resulting from the discharging of the aforementioned effluents into water lines or WWTP and creating a viable and profitable alternative to storage and/or dumping in solid waste landfill sites.

## Description

### Technical Domain of the Invention

The invention consists of a process which uses waste from the timber and cork sectors, namely cork dust, "soils", fibre dust and dust from polishing wood and sawdust, to use the energy of effluents from the timber, cork and cellulose sectors, obtaining products with a great energy value. The process entailed in the present invention is performed via an integrated biomass production line, which can be self-sustained and which may be applied in the energy sector, such as for example in biomass power stations.

### Summary of the invention

The process entailed in the present invention relates to an integrated biomass production process, which uses the effluents and waste from the timber and cork sectors as its raw material, and uses them for energy purposes with waste from the timber and cork sectors, namely cork dust, "soils", fibre dust and dust from polishing wood and sawdust, thereby enabling a product to be obtained which has great calorific power with applications for combustion and energy recovery due to its capacity to generate calorific, mechanical and electrical energy by being burnt in a boiler, in a combined heat and power installation or other heating structures, namely in the form of briquettes or pellets, which can be applied to biomass power stations. When applied, the present invention provides a solution to the environmental problems resulting from the discharging of these effluents into water lines or WWTP and creates a viable and profitable alternative to storage and/or dumping in a solid waste landfill site.

### Background of the Invention

The use of waste and by-products is one of the strategies for improving the productivity of companies which are currently growing in terms of importance. We are increasingly seeing the introduction of factors and the implementation of corporate policies which demonstrate harmony with the environment or which cause minimal environmental impact. The adoption of environmental friendly practices started off essentially being imposed by legislation, but companies quickly noticed that they could also play a very important role in the company's image and productivity, and in their relations with clients, regulatory and supervisory bodies and society.

The appropriate treatment of waste and by-products, and above all the use thereof, has therefore become one of the main business concerns, since it represents added value with a great impact. Because of the strategic importance which companies in the timber, cork and cellulose sectors represent for Portugal and for other producing countries, these companies should not neglect to implement a proactive stance in ensuring constant improvements and searching for better solutions.

Therefore, the present invention constitutes an integrated technological platform of great importance for the industries operating within those sectors, by launching them into a strategic framework characterised by an increase in productivity and cleaner and more environmental friendly production, and by contributing towards preserving the environment.

The present invention entails an integrated process for energy recovery of waste and effluent from the timber sectors, namely that of wood particles which proceeds the manufacture of particle- and fibre-board and the manufacture of veneers, plywood, laminates and other panels (panels and veneers sub-sector), of cork and of cellulose (production of paper and paper paste).

The Plano Nacional de Prevença̅o de Resíduos Industriais (PNAPRI) {National Plan for the Prevention of Industrial Waste} published in November 2000 set out a production of 112,941 t/year of timber waste in the wood panels and veneers sub-sector and stated that it was impossible to quantify the amount of liquid effluent "because the data cannot be accessed in any way whatsoever", PNAPRI, Vol. VII.3, page 23. However, the same study states on page 32 of Vol. VTT.3 that the management and end destination of the effluents from the timber sector are a major problem for companies.

More recently, the Inventário Nacional de Produção de Resíduos Industriais (INPRI) {National Inventory of Production of Industrial Waste}, published in July 2003, did not perform a direct assessment and inventory of the effluents from this sector, but, it is possible using the data available to deduce that they were responsible for around 26% of the total quantity of waste produced, and come under the code CER 03 01 99 pertaining to "other waste from the processing of timber and production of non-specified panels and furniture".

The chemical composition of the effluents from the timber sector, namely with regard to the panels and veneers sub-sector, has been the subject of great interest from the worldwide scientific community because of its environmental impact. Several studies are known which endeavour to contribute towards characterising the effluents and/or towards solutions for reducing or eliminating their environmental impact. One example is the study "Methanogenic toxicity and continuous anaerobic treatment of wood processing effluents", published in the "journal of environmental management" no. 74 (4), pages 317-325 in March 2005. This work sets out a comparative study of the toxicity produced by three effluents from the timber sector (production of particle- and fibre-board and of paper and paper paste according to the Kraft method).

In the cork sector, the waste water from boiling used in preparing and treating cork is mainly discharged into WWTP and possibly into some water lines. New methods have been developed over the years to ensure greater efficiency in the cork boiling process and to reduce the environmental impact of the resulting waste water. We refer you to the works of Helena Pereira and Augusta Costa from the Centro de Estudos Florestais do Instituto Superior de Agronomia da Universidade Técnica de Lisboa {Centre for Forestry Studies at the Higher Institute of Agronomy at the Technical University of Lisbon} which indicate that the new production units and projects to modernise existing units include new equipment including, amongst other items, new boiling tanks to replace the old open tanks and have direct heating, usually including closed autoclaves, filtering of boiling waters, and subsequent circulation using heat exchangers where, in some cases, volatiles are removed.

Within this remit, we could mention the INETI project, in partnership with the IST, headed up by the researcher Ana Anselmo entitled "Characterisation of the Water used for Boiling Cork", whose aims state that "The purpose of this project consists of treating and using waste water resulting from boiling cork, with a view to developing a treatment/recovery system, based on national technology, suitable for the sector in question, within the current context of sustainable development".

We should also mention the project "Removal of contaminants from the water used for boiling cork" in partnership between the DEQ/ISEC with the company Subercentro - Cortiças, Lda. And the article "Integrated fenton's reagent: coagulation/flocculation process for the treatment of cork processing wastewaters", Journal of hazardous materials 2004, vol. 107, no. 3, pp. 115-121, written by PERES Jose A.; DE HEREDIA Jesus Beltran; DOMINGUEZ Joaquin R. The Centro Tecnológico da Cortiça (CTCOR) (Technological Cork Centre) offers the course "Recycling Project", with the aim of studying the possibility of using water from boiling cork for tanning leather.

Black liquor is a by-product from the production of paper paste, and is already partly used for energy recovery within the production unit itself. Nevertheless, the process of use *in situ* by the paper and paper paste production units does not seem to constitute a universal solution which is free of procedural and yield problems. In fact, this seems to indicate the attention which black liquor raises in the worldwide scientific community, of which the following articles are examples:
· "Surfactant phase equilibria and separation of amphiphilic extractives from black liquor in kraft cooking of wood" Pirttinen, Stenius, Pirttinen Kovasin, Kari, journal of dispersion science and technology 28 (1): p. 5-10 JAN 2007 ;
· "Extraction of lignin and hemicelluloses from kraft black liquor" Wallberg, Linde, Jonsson, Desalination 199 (1-3):p. 413-414 NOV 2006 ;
• "Effect of chloride and potassium on borate autocausticizing reactions during black liquor combustion" Mao, Kim, Tran, Kochesfahani, Pulp & Paper-Canada 107 (10):p. 33-36 OCT 2006;
• "Integrated biological treatment of wastewater from the Kraft cellulose industry" Ortega-Clemente et al, Ingenieria Quimica (29): 74-87 JUL 2006.

This recent research activity seems to demonstrate that the treatment and use of black liquor constitute major spheres of study. Within this context, the process entailed in the present invention may be a solution which contributes towards the stabilisation, treatment and use of this by-product since it enables a solid combustible product (biomass) to be obtained, which, in addition to this, has a greater calorific power than black liquor on its own.

Furthermore, with regard to waste from the cork sector, such as cork dust (particles of cork with a grading of less than 0.2 mm) and "soils" (particles from the external surfaces of the planks of cork), considered to be industrial waste (code LER 03 01 99), we can essentially note problems relating with how they are disposed of and stored, as well as the harmful effects to the environment that they cause. We should, in this case, point out the study by the Industrial Association of the district of Aveiro ("Multi-Sector Study in the Area of the Environment" 2000.), which explicitly states on page 61, that "The production of cork dust is also responsible for some physiographical changes seen in the Borough of Santa Maria da Feira (small vales which disappear owing to the continuous dumping of cork dust therein)". However, as stated in the study by Prof. Luis Cabral e Gil: "Cork Technology of Processing and Chemical Constitution", INETI, "Cork dust has been used chiefly as fuel for the production of energy (burning in boilers), and a small fraction of the remainder is used to fill in gaps in lower quality stoppers, to manufacture linoleum, to control land, etc."

Waste from the timber sector, namely dust from polishing and fibre dust from the finishing of fibre- and particle-boards and sawdust is waste which causes some problems in terms of disposal and storage although they are to a great extent used for energy recovery by burning in boilers. Nevertheless, essentially with regard to waste with a smaller grading (dust from polishing and fibre dust), the burning thereof in boilers is a process which requires operating rules with very strict safety standards, and is not free of risks which are considerably greater than the burning of pellets or briquettes.

In the timber, cork and cellulose sectors, effluents - namely water from boiling cork, black liquor and water from boiling and cleaning wood chips - have very large production volumes (flows) which renders their treatment and/or use difficult to resolve.

The process entailed in the present invention intends to set out a solution to this problem by using these effluents for energy recovery in a continuous biomass production line.

Document PT103470 describes the use of waste from the cork industry in the treatment of waste and effluent from olive presses, which is different to that set out in the present invention because it only uses waste from cork and is only applied to waste and effluent from the olive oil sector. The process described in the present invention also uses waste from the timber sector, in a different formulation, with different percentages of cork waste and with new components (for example fibre dust and dust from polishing wood particles) in order to make use of the effluents from the timber, cork and cellulose sectors.

The process entailed in the present invention enables a reduction in the biomass drying operation temperature when compared to the process described in document PT103470 or, alternatively, using the same temperature, a biomass is obtained which has a lower percentage of humidity (a fundamental factor in the quality of this product) or, a reduced drying time.

As far as energy recovery is concerned, the process described in document 103470 leads to a biomass with a lower calorific power (22.2 MJ/kg) and with a greater percentage of ash (3.9%) and humidity (8.9%) than that obtained by the process entailed in the present invention.

Document US4079001A1 describes a process for the purification of industrial effluents via a process of adsorption. In this process, certain components of the effluents are retained or accumulated on the surface of a solid, and the effluent itself (liquid is not retained or used (liquid matrix). The document discloses the use of the process in purifying effluents from sectors such as the paper, textile, leather and dye production sectors, and is therefore a filtering process and not a process for using effluents which, in this case, is a partial solution, whilst the process entailed in the present invention translates into an overall solution which treats the effluent in its entirety and which uses the end product obtained during the process.

Document US5354479A1 also mentions an effluent purification process, in this case from the timber sector (effluents containing wood resin), via the use of chemical products such as flocculation agents. In this process, the chemical products added to the effluent result in the cellulose coalescing into solid aggregates which subsequently become sediment or are kept back by filtering systems. Thus document US5354479A1 discloses a physical and chemical process for reducing the concentration of a single component (cellulose) in the effluent, and is also a filtering process.

Document US5470480A1 mentions a system to reduce the pollution burden of effluents from the paper and paper paste industry via oxidation processes. This differs from the process hereby proposed insofar as it refers to a chemical process to accelerate the deterioration of the organic material (by oxidation) and not to a physical process of mixing with waste from the cork and timber sector followed by use of the end product for energy purposes.

### General Description of the Invention

The present invention refers to a process which uses the waste from the timber and cork sectors, namely cork dust, "soils", fibre dust and dust from polishing wood and sawdust, which when added to the effluents from the timber, cork and cellulose sectors, via an integrated biomass production line, generates products with a great calorific power with applications for combustion, used for energy purposes due to their capacity to generate calorific, mechanical and electrical energy by being burnt in a boiler, in a combined heat and power installation or other heating structures, namely in the form of briquettes or pellets.

The present invention thus consists of promoting the mixing of solid waste, such as, for example, those usually known as cork dust, "soils", fibre dust and dust from polishing wood particles and sawdust, with effluents, such as for example, water from boiling/cleaning wood chips or water from boiling cork or black liquor. This process uses, on average, an amount of solid waste which is slightly lower (between 1 and 5%) than the amount of effluent to be treated.

The process of energy recovery from the effluents of timber, cork and cellulose sectors, results from a mechanical mixing, in a horizontal or vertical mixer, of the solid waste (such as, for example, those usually known as cork dust, "soils", fibre dust and dust from polishing wood particles and sawdust) with the effluents from those sectors (such as for example water from boiling/cleaning wood chips or water from boiling planks of cork or black liquor).

This is followed by an extrusion and drying stage in order to obtain the biomass as pellets or briquettes.

The process is based on an integrated biomass production line which may be self-sustained energy-wise, which contributes decisively towards the feasibility of its implementation.

The process consists of simultaneously letting in the effluent (for example water from boiling cork or water from boiling/cleaning wood chips or black liquor) with the solid waste (for example cork dust, "soils", fibre dust from timber and sawdust) into a mixer-extruder.

Upon intake, the ratio between the volume flow rate of effluent and the volume flow rate of solid waste ideally lies within a range of mixtures of between 1:1 and 1:0.8 (v/v).

After being mixed, the material is subject to extrusion via a spinneret using a coupled cutting system, which creates units of material with a certain form and mass, such as for example in the form of briquettes and/or pellets, which are carried on a conveyor belt to a continuous flow dryer.

The material units are subject to drying which reduces their degree of humidity to values of less than 10%, whereupon it will constitute a biomass. The steam from the drying process can be carried to a steam management system, where its final destination may be dissipation into the atmosphere and/or to be recovered in the form of water made liquid by condensation and/or be used to heat and regulate the environmental humidity content in certain industrial spaces.

The biomass obtained may be fully or partially carried to a burning system in order to produce energy. The burning system for producing energy may be a combined heat and power boiler, and it is possible, in this case, that part of this power and heat can supply power by return to the line itself for the energy recovery of effluents. In this case, part of the heat produced is carried to the drier in order to dry the material following mixing and part of the power, as a power supply, assures the operation of the entire biomass production line. In this way, we can obtain an integrated and self-sustainable system for using effluents.

The product obtained, following the process of energy recovery from effluents and waste from the timber, cork and cellulose sectors, has the following characteristics, amongst others:
a) The agglomerate (biomass) obtained from water used for boiling/cleaning wood chip with cork dust, fibre dust from, wood and sawdust has a calorific power of between (24.5 and 26.4) MJ/kg (using the ASTM D 1989 method), a percentage of ash of between 1.0 and 1.5 % (using the LAQ/MI 04 method) and a humidity of between 3.0 and 5.0 % (using the LAQ/MI 01 method).
b) The agglomerate (biomass) obtained from water used for boiling cork with cork dust has a calorific power of between 23.5 and 25.2 MJ/kg (using the ASTM D 1989 method) a percentage of ash of between 1.5 and 2.5 % (using the LAQ/MI 04 method) and a humidity of between 2.0 and 5.0 % (using the LAQ/MI 01 method).
c) The agglomerate (biomass) obtained from black liquor with cork dust, fibre dust from wood and sawdust has a calorific power of between 19.5 and 20.7 MJ/kg (using the ASTM D 1989 method) a percentage of ash of between 20 and 35 % (using the LAQ/MI 04 method) and a humidity of between 9.0 and 11.0 % (using the LAQ/MI 01 method).

Thus, the use of these products as biomass for burning in a boiler is highly viable since it results in products with a great calorific power and low percentage of humidity. In fact, if we use as a reference the parameters pertaining to the calorific power and humidity we can see, by comparison to the same parameters of other samples of vegetable biomass available on the market in the form of pellets or briquettes (calorific power of between 15.9 and 18.7 MJ/kg, using the ASTM D 1989 method and a percentage of humidity of between 9 and 14%) that, in cases such as those set out in sub-paragraphs a and b (henceforth called Product A and Product B), we are in the presence of new products. Below are the technical characteristics of the products.

Product A - Biomass obtained from water from boiling/cleaning wood chips with cork dust, fibre dust from wood and sawdust which has an elementary composition, with a dry base, including 0.979 % of Nitrogen, 62.7% of Carbon, 9.04% of Hydrogen and an amount of Sulphur of less than 100 ppm, a higher calorific power of between 26.4 MJ/kg (dry base) and 25.6 MJ/kg, a lower calorific power of between 24.5 MJ/kg (dry base) and 23.6 MJ/kg, a humidity of 3.2% and a percentage of ash of 1.2%.

Product B - Biomass obtained from water from boiling cork with cork dust and "soils" which has an elementary composition, with a dry base, including 0.865 % of Nitrogen, 62.9% of Carbon, 7.99% of Hydrogen and an amount of Sulphur of less than 100 ppm, a higher calorific power of between 25.2 MJ/kg (dry base) and 24.7 MJ/kg, a lower calorific power of between 23.5 MJ/kg (dry base) and 23.0 MJ/kg, a humidity of 2.0% and a percentage of ash of 1.7%.

Product C - Biomass obtained from black liquor with cork dust, fibre dust from wood and sawdust which has an elementary composition, with a dry base, including 0.641 % of Nitrogen, 48.5% of Carbon, 5.75% of Hydrogen and 3.54% of Sulphur, a higher calorific power of between 20.7 MJ/kg (dry base) and 18.8 MJ/kg (exactly), a lower calorific power of between 19.5 MJ/kg (dry base) and 17.4 MJ/kg (exactly), a humidity of 9.3% and a percentage of ash of 35%.

Thus, the product obtained using the process for using effluents and waste from the timber, cork and cellulose sectors, may therefore be presented in the following forms: pellets, briquettes and in bulk, and the respective expected applications are:
- In biomass power stations for energy production (according to classic processes or in combined heat and power systems), for the industrial unit itself or for an external unit.
- For burning in heating systems (private individuals or companies).

The process of energy recovery from effluents and waste from the timber, cork and cellulose sectors which is the subject of the present invention can be applied in the following situations:
- Energy recovery from effluents from the wood particles production industry ("water from boiling/cleaning wood chips");
- Energy recovery from of effluents from the cork industry ("water from boiling cork");
- Energy recovery from effluents from the cellulose industry ("black liquor");

The energy recovery from these effluents is achieved via the use and energy recovery from solid waste from the cork industry, such as cork dust, "soils" and other cork residue, and of solid waste from the timber industry, such as sawdust, fibre dust, dust from polishing and other wood residue.

Therefore, and taking into account the amount of effluents and waste currently produced, the process of energy recovery from effluents and waste from the timber, cork and cellulose sectors which is the subject of the present invention can be applied in any type of unit from those sectors, based on an integrated biomass production line (which can be self-sustained). Thus, the process which is the subject of the present invention constitutes a complete and universal solution for the efficient energy recovery from those effluents and waste.

### Detailed Description of the Invention:

### 1. Mixing of solid waste with effluents

The mixing of solid waste, such as cork dust, "soils", fibre dust and dust from polishing wood particles and sawdust, with the effluents and waste from the timber, cork and cellulose sectors, such as water from boiling/cleaning wood chips or water from boiling cork or black liquor, is performed via mechanical means, using a horizontal or vertical mixer. This process uses, on average, an amount of solid waste which is slightly lower (between 1 and 5%) than the amount of effluent to be treated.

The process consists of simultaneously letting in the effluent with the solid waste into a mixer-extruder.

The ratio between the volume flow rate of effluent and the volume flow rate of solid waste ideally lies within a range of mixtures of between 1:1 and 1:0.8 (v/v).

### 2. Extrusion and drying

After being mixed, the material is subject to extrusion via a spinneret using a coupled cutting system, and the product obtained is carried to a continuous flow dryer on a conveyor belt.

The biomass obtained may be fully or partially carried to a burning system in order to produce energy in a combined heat and power installation. Part of the heat produced here is carried to the drier, in order to dry the material following mixing, and part of the electrical power produced, as a power supply, assures the operation of the entire biomass production line.

### 3. Moulding of the end product

The product is moulded by extrusion via a spinneret or being placed in a mould. The geometry and dimension of the spinneret's orifices or the geometry and dimensions of the moulds determine the shape of the end product. Moulding is thus performed, thereby giving the product the form of a pellet, briquette, plug or any other desired form. The form of the end product is consolidated by drying.

### Examples

Below are some non-restrictive examples of the process of energy recovery from effluents and waste from the timber, cork and cellulose sectors.

### Example 1:

Process for energy recovery from effluents and waste from the timber sector (water from boiling/cleaning wood chips, sawdust and fibre dust from wood) and waste from the cork sector (cork dust) which includes the following steps:
1. Mixing in a mixer-extruder of water from boiling/cleaning wood chips with 12% (m/m) of cork dust, 3.5% (m/m) of fibre dust from wood and 0.5% (m/m) of sawdust.
2. Extrusion of the mixture in a spinneret followed by cutting the material into portions in order to obtain pellets or briquettes.
3. Drying of the pellets or briquettes in a drier until a material has been obtained with a humidity content of less than 10%.

The aforementioned process generates a biomass with a calorific power of between [24.5 and 26.4] MJ/kg (using the ASTM D 1989 method), a percentage of ash of between 1.0 and 1.5 % (using the LAQ/MI 04 method) and a humidity of between 3.0 and 5.0 % (using the LAQ/MI 01 method).

### Example 2:

Process for energy recovery from effluents and waste from the cork sector, such as water from boiling cork, cork dust and "soils", which includes the following steps:
1. Mixing in a mixer-extruder of water from boiling cork with 13% (m/m) of cork dust, and 2% (m/m) of "soils".
2. Extrusion of the mixture in a spinneret followed by cutting the material into portions in order to obtain pellets or briquettes.
3.Drying of the pellets or briquettes in a drier until a material has been obtained with a humidity content of less than 10%.

The aforementioned process generates a biomass with a calorific power of between 23.5 and 25.2 MJ/kg (using the ASTM D 1989 method) a percentage of ash of between 1.5 and 2.5% (using the LAQ/MI 04 method) and a humidity of between 2.0 and 5.0% (using the LAQ/MI 01 method).

### Example 3:

1. Mixing in a mixer-extruder of black liquor with 12% (m/m) of cork dust, 3% (m/m) of fibre dust from wood and 1% (m/m) of sawdust.
2.Extrusion of the mixture in a spinneret followed by cutting the material into portions in order to obtain pellets or briquettes.
3.Drying of the pellets or briquettes in a drier until a material has been obtained with a humidity content of less than 10%.

The aforementioned process generates a biomass with a calorific power of between 19.5 and 20.7 MJ/kg (using the ASTM D 1989 method) a percentage of ash of between 20 and 35% (using the LAQ/MI 04 method) and a humidity of between 9.0 and 11.0 % (using the LAQ/MI 01 method).

## Claims

1. Biomass production process using industrial waste and effluents **characterised in that** it comprises the following steps:
a) Obtaining a homogenous paste by mixing the industrial effluents from at least one of the following sectors: cork, timber and cellulose with sawdust, fibre dust and dust from polishing wood particles, cork dust and "soils";
b) Obtaining a solid product by placing the paste in moulds followed by a drying stage;
c) Obtaining a solid product in the form of pellets and/or briquettes by extruding the paste followed by a drying stage;

2. Biomass production process, according to claim 1 to 2, **characterised in that** the paste is dried in a drier, drying stove, or air.

3. Biomass production process, according to claim 1, **characterised in that** pellets and/or briquettes are obtained by extruding the paste via a spinneret.

4. Biomass production process, according to claim 3, **characterised in that** the pellets and/or briquettes are dried, in a drier, drying stove, or air.

5. Using the process according to the preceding claims, **characterised in that** it is intended to manufacture combustible materials.

6. Combustible mixtures obtained according to the process set out in claims 1 to 4, **characterised in that**:
a) an elementary composition, with a dry base, comprising 0.979% Nitrogen, 62.7% Carbon, 9.04% Hydrogen and an amount of Sulphur inferior to 100 ppm, a higher calorific power between 26.4 MJ/kg (dry base) and 25.6 MJ/kg (exactly), a lower calorific power of between 24.5 MJ/kg (dry base) and 23.6 MJ/kg, a humidity of 3.2% and a percentage of ash of 1.2%;
b) an elementary composition, with a dry base, comprising 0.865 % Nitrogen, 62.9% Carbon, 7.99% Hydrogen and an amount of Sulphur inferior to 100 ppm, a higher calorific power of between 25.2 MJ/kg (dry base) and 24.7 MJ/kg (exactly), a lower calorific power of between 23.5 MJ/kg (dry base) and 23.0 MJ/kg, a humidity of 2.0% and a percentage of ash of 1.7%.

7. Use of the combustible mixtures, according to the preceding claim, **characterised in that** it is intended for applications in energy.
